Europäisches Patentamt

European Patent Office

Office européen des brevets

(11) Veröffentlichungsnummer: **0 026 500**
**B1**

(12) # EUROPÄISCHE PATENTSCHRIFT

(45) Veröffentlichungstag der Patentschrift:
19.01.83

(51) Int. Cl.³: **H 04 B 1/44**

(21) Anmeldenummer: **80200659.3**

(22) Anmeldetag: **07.07.80**

(54) Wechselsprech-Funkanlage mit Steuerung der Gesprächsrichtung von einer einzigen Station aus.

(30) Priorität: **28.09.79 CH 8765/79**

(43) Veröffentlichungstag der Anmeldung:
**08.04.81 Patentblatt 81/14**

(45) Bekanntmachung des Hinweises auf die Patenterteilung:
**19.01.83 Patentblatt 83/3**

(84) Benannte Vertragsstaaten:
**AT BE CH DE FR IT LI NL SE**

(56) Entgegenhaltungen:
**BE-A-545 093**
**DE-A-1 929 515**
**FR-A-1 250 179**
**US-A-4 082 919**

(73) Patentinhaber: **Autophon A.G., Ziegelmattstrasse 1-15,
CH-4500 Solothurn 3 (CH)**

(72) Erfinder: **Affolter, Stephan, Rötistrasse 27,
CH-4513 Langendorf (Kanton Solothurn) (CH)**

(74) Vertreter: **Bovard, Fritz Albert et al, Bovard & Cie
Patentanwälte VSP Optingenstrasse 16,
CH-3000 Bern 25 (CH)**

BUNDESDRUCKEREI BERLIN

## Wechselsprech-Funkanlage mit Steuerung der Gesprächsrichtung von einer einzigen Station aus

Die vorliegende Erfindung bezieht sich auf eine Wechselsprech-Funkanlage mit einer einen Sender-Empfänger aufweisenden Hauptstation und mindestens einer einen Sender-Empfänger aufweisenden Unterstation, in welcher Anlage sich der Verkehr zwischen der Haupt- und einer Unterstation auf einem einzigen Kanal abspielt und die Stationen von einer Station aus je zwischen Empfang und Sendertastung umschaltbar sind, mit einem an der Hauptstation vorhandenen, von Hand betätigbaren Sprechschalter zur Tastung des zugehörigen Senders.

In solchen Anlagen ist es üblich, daß an jeder Station ein von Hand betätigter Schalter vorhanden ist, dessen Betätigung jeweils die Sendertastung bewirkt und welcher zwecks Umschaltung auf Empfang in die Ruhelage verbracht werden muß. Es kann jedoch störend oder sogar unmöglich sein, an einer Unterstation einen solchen Schalter zu betätigen. Dies trifft besonders für Führer von Fahrzeugen, Maschinisten oder Feuerwehrleute zu, welche mit beiden Händen tätig sind und welche ihre Arbeit nicht unterbrechen können um einen an sie gelangten Anruf zu beantworten.

Aus der deutschen Offenlegungsschrift 1 929 515 ist eine Funkanlage für Wechselsprechen der beschriebenen Art bekanntgeworden, in welcher die Tastung an zwei miteinander verkehrenden Stationen von einer einzigen Station aus gesteuert wird. Die erste dieser Stationen hat keinen Tastungsschalter und sendet, sofern nicht eingegriffen wird, dauernd. Dabei unterbricht sie die Sendung in verhältnismäßig langen Abständen jeweils für kurze Zeit und schaltet während dieses Zeitschlitzes auf Empfang um. Sofern während dieses Zeitschlitzes die zweite dieser Stationen aufgrund der Betätigung des dort vorhandenen Sprechschalters sendet, bleibt die erste Station solange auf Empfang als sie ein Signal der zweiten empfängt. Anschließend schaltet sie wiederum auf Senden zurück. Dabei wird ausschließlich mit Hilfe der Trägerwelle gesteuert, wobei der Ablauf der Steuerung durch Störträger nachteilig beeinflußt werden kann. Bei Störungen am Empfangsteil der ersten Station ergibt sich außerdem der Nachteil, daß diese Station dauernd sendet, wodurch auch der Verkehr mit andern Stationen beeinträchtigt werden kann. Als weiterer Nachteil kommt hinzu, daß die genannte erste Station kaum als tragbare Unterstation verwendet werden kann, indem sie auch während Gesprächspausen beider Gesprächspartner sendet und somit einen bei tragbaren Stationen störend hohen Energieverbrauch aufweist.

Bei der vorliegenden Erfindung werden nun gewisse Grundsätze der bekannten Funkanlagen angewendet, wobei jedoch die beschriebenen Nachteile vermieden werden. Indem für sämtliche Steuerungen besondere Signale, vorzugsweise Tonfrequenzsignale, verwendet werden, ist die Störungsanfälligkeit gegenüber einer Signalgabe mit der Trägerwelle allein vermindert. Während den Zeiten, während welchen an keiner der Stationen gesprochen wird, sind, wie bei einer normalen Wechselsprechanlage, beide Stationen auf Empfang geschaltet.

Die vorliegende Erfindung betrifft eine Wechselsprech-Funkanlage nach dem Oberbegriff des Patentanspruches 1, deren Merkmale aus dem kennzeichnenden Teil des Patentanspruches 1 entnommen werden können. In besonderen Ausführungsformen der Erfindung werden außer den im Patentanspruch 1 beschriebenen Schaltungsteilen noch weitere angeordnet, welche die Betriebsabläufe in vermehrtem Maße zwangsläufig gestalten.

In der Folge wird die Erfindung anhand eines Ausführungsbeispiels beschrieben.

Die Figur 1 zeigt das stark vereinfachte Schaltungsschema der Hauptstation, wobei die nicht mit der Erfindung im Zusammnehang stehenden Baugruppen ohne Einzelheiten, die mit der Erfindung im Zusammenhang stehenden Teile dagegen mit mehr Einzelheiten dargestellt sind.

Die Figur 2 zeigt ein in derselben Art dargestelltes Schaltungsschema einer Unterstation.

Wie bereits erwähnt wurde, wird in der Verkehrsrichtung Hauptstation-Unterstation ein Aufforderungssignal und in der Gegenrichtung ein Schlußsignal zeitweise dem Träger aufmoduliert. Für diese beiden Signale werden im vorliegenden Ausführungsbeispiel am oberen Rand des Sprachbereichs liegende Tonfrequenzen, z. B. 2700 Hz, verwendet. Es wäre natürlich auch eine Signalgabe mit unterhalb des Sprachbereichs liegenden Frequenzen oder auch mit Impulsen möglich. Da, wie später erklärt wird, ohnehin dafür gesorgt werden muß, daß nur eine einzige Unterstation gleichzeitig arbeitet und damit keine Möglichkeit einer gegenseitigen Beeinflussung der Unterstationen gegeben ist, kann für beide Signale die gleiche Frequenz verwendet werden.

Die Hauptstation umfaßt einen Sender 101 und einen Empfänger 102, welche auf derselben Frequenz arbeiten und über die Antennen-Umschaltung 103 mit der Antenne 104 in Verbindung gebracht werden können. Diese Umschaltung verbindet im Ruhezustand die Antenne mit dem Empfänger 102 und legt sie, sofern über die Verbindung 105 der Sender 101 getastet wird, an den Sender. Am Eingang des Senders ist über ein Bandsperrfilter 106 ein Mikrofon 107 angeschlossen. Die Sperrfrequenz des Filters entspricht der Frequenz des Aufforderungs-Signals. Das Filter verhindert ein Vortäuschen dieses Signals durch die Sprache.

Der Ausgang des Empfängers 102 verläuft über den elektronischen Schalter 108 und das Bandsperrfilter 109 nach dem Lautsprecher 110. Die Bandsperrfrequenz entspricht dabei der Frequenz des Schlußsignals. Das Filter verhindert eine Störung der Bedienungsperson durch das Schlußsignal. Der im Ruhezustand leitende Schalter 108 verhindert in später erklärter Weise während seines gesperrten Zustandes ein Auftreten von störenden Geräuschen am Lautsprecher 110, wenn die Tastung der empfangenen Unterstation abgeschaltet wird. Das am Empfängerausgang auftretende Signal wird außer dem Lautsprecher 110 über das Bandpaßfilter 111 auch dem Demodulator-Verstärker 112 zugeführt. Das Schlußsignal durchläuft dieses Filter und erzeugt einen Impuls am Ausgang des Demodulator-Verstärkers.

Die Hauptstation umfaßt ferner einen Signalerzeuger 113, welcher, solange sich der monostabile Multivibrator 114 im aktiven Zusand befindet, das Aufforderungssignal erzeugt und es dem Sender 101 über einen zweiten Eingang zuführt. Ein weiterer monostabiler Multivibrator 115 wird parallel zum Multivibrator 114 angestoßen. Sofern dies während seines Arbeitszustandes geschieht fängt seine Haltezeit jeweils neu zu laufen an. Bei seiner Rückkehr in den Ruhezustand gibt der Multivibrator 115 jeweils über das Differenzierglied 116 einen kurzen Impuls an das ODER-Tor 117 ab.

Ein erster Handschalter 118 betätigt über das ODER-Tor 119 den Sender 101 und die Antennen-Umschaltung 103, während ein zweiter Handschalter 120 mit dem UND-Tor 121 und dem Differenzierglied 122 verbunden ist. Dieses Differenzierglied gibt jedesmal am Anfang der Betätigung des zweiten Schalters einen Impuls an das ODER-Tor 117 ab. Die beiden Schalter 118 und 120 sind dabei vorzugsweise mechanisch derart angeordnet, daß sie nicht gleichzeitig betätigt werden können, z. B. als Kippschalter mit einer neutralen Stellung. Der elektronische Schalter 108 wird beim Eintreffen eines das Filter 111 und den Demodulator-Verstärker durchlaufenden Schlußsignals sofort in den sperrenden Zustand verbracht, während infolge der Wirkung des Verzögerungsgliedes 123 nach dem Wegfall dieses Signals der leitende Zustand erst mit einer bestimmten Verzögerung wiederum eintritt.

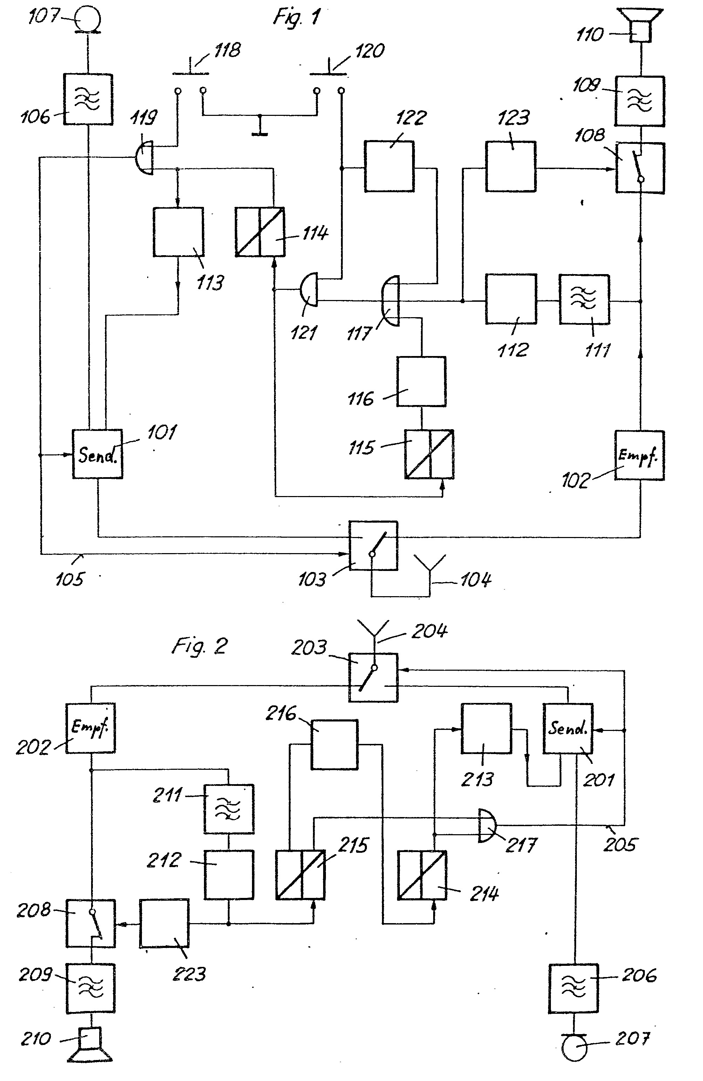

Das Schema Figur 2 einer Unterstation zeigt entsprechend der Figur 1 einen Sender 201, einen Empfänger 202, einen zusammen mit der Sender-Tastung über die Verbindung 205 betätigten Antennen-Umschalter 203 und eine Antenne 204. Auch in der Unterstation ist zwischen das Mikrofon 207 und den Sendereingang ein Band-Sperrfilter 206 eingeschaltet, dessen Sperrfrequenz der Frequenz des von der Unterstation ausgesendeten Schlußsignals entspricht. Am Empängerausgang sind wie in der Hauptstation einerseits über den Schalter 208 und das Bandsperrfilter 209 der Lautsprecher 210 und anderseits über das Bandpaßfilter 211 der Demodulator-Verstärker 212 angeschlossen. Die Durchlaß- bzw. Sperrfrequenz der beiden Filter 211 und 209 entspricht dabei der Frequenz des von der Hauptstation ausgesendeten Aufforderungs-Signals. Der Empfang eines solchen Signals bewirkt über den Demodulator-Verstärker 212 das Anstoßen des monostabilen Multivibrators 215. Dieser Multivibrator versetzt bei seiner Rückkehr in den Ruhezustand über das Differenzierglied 216 den monostabilen Multivibrator 214 in seinen Arbeitszustand.

Solange sich einer der beiden Multivibratoren 214 oder 215 in seinem Arbeitszustand befindet wird über das ODER-Tor 217 der Sender 201 getastet. Der Multivibrator 214 bewirkt außerdem während seines Arbeitszustandes die Inbetriebsetzung des Signalerzeugers 213, welcher das Schlußsignal erzeugt und dieses Signal einem Modulationseingang des Senders 201 zuführt.

Der elektronische Schalter 208, welcher über das Verzögerungsglied 223 vom Aufforderungs-Signal betätigbar ist, entspricht in seiner Wirkungsweise dem Schalter 108 der Hauptstation.

Im vorliegenden Beispiel sind als Zeitglieder fast ausnahmslos monostabile Multivibratoren verwendet. Die Erfindung ist natürlich keinesfalls an solche Zeitmeßeinrichtungen gebunden. Es könnte auch eine Kurzzeitbasis in Verbindung mit Zählern oder irgend eine andere bekannte Zeitmeßeinrichtung verwendet sein.

Eine Funkanlage, die der vereinfachten Darstellung der beiden Figuren entspricht und deren Arbeitsweise in der Folge erklärt wird, kann nur unter der Voraussetzung richtig arbeiten, daß nur eine einzige Unterstation vorhanden ist. Bei praktischen Anwendungen ist dies selten der Fall. Sofern mehr als eine Unterstation zusammen mit einer Hauptstation betrieben wird, muß durch eine nicht dargestellte Einrichtung dafür gesorgt sein, daß zu einem bestimmten Zeitpunkt nur eine einzige Unterstation gleichzeitig senden kann. Eine solche Einrichtung kann ein in der angerufenen Unterstation von Hand betätigbarer Freigabeschalter sein. Vorzuziehen ist eine Selektivruf-Einrichtung, mit welcher die Freigabe und die Sperrung von bestimmten Unterstationen durch die Hauptstation erfolgt. Die Freigabe kann auch darin bestehen, daß der selektive Anruf der Unterstationen auf einem vom Kanal zur Abwicklung des Sprechverkehrs verschiedenen Kanal erfolgt und jeweils nur eine einzige Unterstation auf den Sprechkanal umgeschaltet wird.

Die Zeitkonstanten der Multivibratoren 114 und 214 bestimmen die Dauer des Aufforderungs- bzw. des Schlußsignals und werden beispielsweise mit je ungefähr 50 ms bemessen, während die Zeitkonstante des Multivibrators 215 den zeitlichen Abstand des Schlußsignals vom Aufforderungssignal bestimmt und beispielsweise mit 2 s bemessen ist. Die Zeitkonstante des Multivibrators 115 ist ein wenig länger als diejenige des Multivibrators 215, beispielsweise 2,2 s. Seine Wirkung wird später erklärt.

In der Folge wird der Betrieb der Anlage beschrieben. Der Sprechverkehr kann ausschließlich von der Hauptstation aus eingeleitet werden. Für die von der Unterstation ausgehende Anforderung einer Verbindungsaufnahme müßten nicht mit der Erfindung im Zusammenhang stehende und daher nicht dargestellte Schaltungsmittel angewendet werden.

Der Schalter 118 dient als in gewohnter Weise zu betätigende Sprechtaste und wird solange betätigt als an der Hauptstation gesprochen wird. Über das Tor 119 und die Verbindung 105 wird dann der Sender 101 getastet und der Antennen-Umschalter 103 betätigt. Die in das Mikrofon 107 gesprochene Sprache gelangt über den Sender 101, den Empfänger 202 und den Schalter 208 auf den Lautsprecher 210 der Unterstation. Soll nun an der Unterstation geantwortet werden, wird an der Hauptstation anstelle des Sprech-Schalters 118 der Antwort-Schalter 120 betätigt und so lange in diesem Zustand gehalten als die Antwort von der Unterstation andauert. Die Betätigung des Schalters 120 erzeugt mit Hilfe des Differenziergliedes 122 einen kurzen Impuls, welcher über die Tore 117 und 121 die Multivibratoren 114 und 115 in ihre Arbeitslage versetzt. Während der ungefähr 50 ms dauernden Arbeitslage des Multivibrators 114 wird einerseits über das Tor 119 der Sender 101 getastet und andererseits im Signal-Erzeuger 113 das Aufforderungs-Signal erzeugt. In der Unterstation wird dieses Aufforderungssignal im Filter 211 ausgesiebt und bringt den Multivibrator 215 in die Arbeitslage, wodurch über das Tor 217 und die Verbindung 205 der Sender 201 getastet und somit ermöglicht wird, daß von der Unterstation zur Hauptstation gesprochen wird.

Nachdem die Haltezeit des Multivibrators 215 abgelaufen ist, wird über das Differenzierglied 216 der Multivibrator 214 in den Arbeitszustand versetzt. Die Tastung des Senders 201 bleibt dabei über das Tor 217 erhalten, und zusätzlich wird der Signalerzeuger 213 in Betrieb gesetzt. Infolgedessen wird während ungefähr 50 ms das Schlußsignal ausgesendet, und anschließend geht die Unterstation wieder auf Empfang. In der Hauptstation bewirkt das über das Filter 111 ausgesiebte Schlußsignal — sofern dann der Schalter 120 immer noch betätigt ist — das erneute Anstoßen des Multivibrators 114. Der Multivibrator 115, dessen Zeitkonstante größer ist als diejenige des Multivibrators 215, befindet sich somit immer noch im Arbeitszustand, und dessen Haltezeit beginnt durch den über das Tor 121 an ihn gelangten Impuls wiederum neu zu laufen. Der Multivibrator 114 veranlaßt — wie bereits beschrieben wurde — während seines Arbeitszustandes die Aussendung des Aufforderungs-Signals, worauf der beschriebene Ablauf wiederum von vorne beginnt.

Dieses Spiel wird erst dann unterbrochen, wenn der Schalter 120 geöffnet wird. Infolge der Wirkung des Tors 121 kann dann der Multivibrator 114 nicht mehr angestoßen werden, wodurch die Aussendung des Aufforderungs-Signals unterbleibt und damit auch der Multivibrator 215 nicht mehr angestoßen wird.

Sollte einmal, während der Kontakt 210 geschlossen ist, ein von der Unterstation ausgesendetes Schlußsignal aus irgend einem Grunde nicht empfangen werden, kehrt auch der Multivibrator 115 in seine Ruhelage zurück und erzeugt dabei über das Differenzierglied 116 einen Impuls, welcher über die Tore 117 und 121 gleich wirkt wie ein eingetroffenes Schlußsignal.

Während des geschlossenen Zustandes des Schalters 120 wird somit von der Hauptstation periodisch ein kurzes Aufforderungssignal ausgesendet, was jeweils während einer bestimmten Zeit die Aussendung des Trägers der Unterstation bewirkt. Nach dem durch ein kurzes Schlußsignal angekündigten Unterbruch dieses Trägers wird er durch ein (aufgrund des Schlußsignals eingeschaltetes) erneut ausgesendetes Aufforderungssignal wiederum eingeschaltet. Infolge der Wirkung der Bandsperrfilter 109 und 209 können die beiden Signale nicht auf die Lautsprecher der Stationen gelangen und daher nicht stören. Die Möglichkeit einer weiteren Störung ergäbe sich ohne die Anordnung besonderer Maßnahmen durch das periodische Abschalten der Gegenstation. Die Empfänger besitzen zwar in allgemein üblicher Weise eine Rauschsperre (squelch), welche jeweils, sofern die Gegenstation nicht sendet, das sonst am Empfängerausgang auftretende Rauschen unterdrückt. Es liegt jedoch in der Natur der Sache, daß diese Rauschsperre eine endliche Ansprechzeit hat, wodurch jeweils beim Abschalten der empfangenen Station ein Schwall Rauschen am Empfängerausgang auftritt. Während dieses Rauschen bei einer normalen Wechselsprech-Funkverbindung nur beim Wechsel der Gesprächsrichtung auftritt und deshalb wenig störend ist, würde das periodische Auftreten dieser Geräusche während einer von den Gesprächsteilnehmern aus betrachteten ununterbrochenen Verbindung stören. Diese Störungen sind in der beschriebenen Anlage verhindert, indem die Schalter 108 und 208 jeweils während des Empfangs des von der Gegenstation stammenden, der Abschaltung des betreffenden Senders vorangehenden Signals betätigt und durch das zugehörige Verzögerungsglied 123 oder 223 während des Auftretens des erwähnten Geräusch-Schwalls im Arbeitszustand gehalten werden. Im Unterschied gegenüber einer normalen Wechselsprech-Funkverbindung ist das Gespräch Unterstation-Hauptstation ungefähr alle 2 s während ungefähr 100 ms, beim Fehlen eines Schlußsignals noch etwas länger, unterbrochen, wobei jedoch keine störenden Schaltgeräusche auftreten. Es hat sich aber gezeigt, daß diese Unterbrüche sehr wenig stören und die Verständlichkeit nicht wesentlich beeinträchtigen. Eine Einschränkung gegenüber einer allgemein üblichen Wechselsprechanlage besteht ferner darin, daß die Gesprächsrichtung nicht in jedem beliebigen Zeitpunkt gewechselt werden kann.

Während der Übergang von der Sendung der Hauptstation zur Sendung der Unterstation jederzeit erfolgen kann, muß beim Übergang von der Sendung der Unterstation zur Sendung der Hauptstation der Zeitpunkt abgewartet werden, in welchem die Unterstation selbständig von Sendung auf Empfang übergeht, was, von der Betätigung des Schalters 118 an gerechnet, höchstens eine der Zeitkonstanten des Multivibrators 215 entsprechende Zeit, im vorliegenden Beispiel 2 s, dauert. Um dem Sprecher an der Hauptstation die Arbeit zu erleichtern, könnte eine nicht dargestellte Überwachungslampe angebracht werden, welche anzeigt, wann während der Betätigung des Schalters 118 die Unterstation auf Empfang geschaltet ist. .

Die Erfindung ist natürlich nicht an das Ausführungsbeispiel gebunden. Insbesondere die angegebenen Abstände der Signale können frei gewählt werden. Werden sie kürzer als 2 s gewählt, kann zwar die Gesprächsrichtung schneller gewechselt werden, dagegen dürften die Unterbrüche stärker stören, während bei länger gewählten Abständen das Gegenteil der Fall ist. Sofern die Zeiten der verschiedenen Zeitmesser (im Beispiel Multivibratoren) sehr genau aufeinander abgestimmt wären, könnte auf das Schlußsignal verzichtet werden, indem dann die sonst vom Schlußsignal in der Hauptstation ausgelösten Vorgänge in einem bestimmten zeitlichen Abstand von der Aussendung des Aufforderungs-Signals selbsttätig ausgelöst werden könnten.

**Patentansprüche**

1. Wechselsprech-Funkanlage mit einer einen Sender-Empfänger (101, 102) aufweisenden Hauptstation (Fig. 1) und mindestens einer einen Sender-Empfänger (201, 202) aufweisenden Unterstation (Fig. 2), in welcher Anlage sich der Verkehr zwischen der Haupt- und der Unterstation auf einem einzigen Kanal abspielt und die Stationen von einer Station aus je zwischen Empfang und Sendertastung umschaltbar sind, mit einem an der Hauptstation vorhandenen, von Hand betätigbaren Sprechschalter (118) zur Tastung des zugehörigen Senders (101), dadurch gekennzeichnet, daß in der Hauptstation ein von Hand betätigbarer Antwortschalter (120), ein Erzeuger (113) eines Aufforderungssignals und eine erste Zeitmeßeinrichtung (114) vorhanden sind, welche Zeitmeßeinrichtung die Aussendung eines Aufforderungssignals durch den Sender veranlaßt und die Dauer dieses Signals bestimmt, daß das Aufforderungssignal, solange der Antwortschalter (120) betätigt ist, je während einer verhältnismäßig kurzen Dauer mit gegenüber dieser Dauer langen Abständen periodisch erzeugt wird, daß in jeder Unterstation eine Empfangs- und Auswerteeinrichtung (211, 212) für das Aufforderungssignal und eine erste Zeitmeßeinrichtung (215) vorhanden sind, welche Zeitmeßeinrichtung aufgrund des Empfanges eines Aufforderungssignals den Sender (201) der betreffenden Unterstation tastet und die Dauer dieser Tastung bestimmt, und daß die Zeitkonstante der letztgenannten Zeitmeßeinrichtung (215) kleiner ist als die Abstände zwischen der Erzeugung des Aufforderungssignals, so daß somit die Tastung der betreffenden Unterstation (Fig. 2) ausschließlich von der Hauptstation (Fig. 1) aus durch Betätigung des Antwortschalters (120) gesteuert wird.

2. Funkanlage nach dem Patentanspruch 1, dadurch gekennzeichnet, daß in jeder Unterstation ein Erzeuger (213) eines Schlußsignals und eine zweite Zeitmeßeinrichtung (214) vorhanden sind, welche Zeitmeßeinrichtung jeweils aufgrund der Rückkehr in den Ruhezustand der ersten Zeitmeßeinrichtung (215) dieser Unterstation in den Arbeitszustand versetzt wird und während einer in der Größenordnung der Dauer des Aufforderungssignals liegenden Zeit die Aussendung eines Schlußsignals durch den Sender (201) der betreffenden Unterstation veranlaßt, und daß in der Hauptstation eine Empfangs- und Auswerteeinrichtung (111, 112) für das Schlußsignal und logische Verknüpfungsschaltungen (117, 121) vorhanden sind, welche die Erzeugung des Aufforderungssignals veranlassen, sofern ein Schlußsignal empfangen wird und der Antwortschalter (120) betätigt ist.

3. Funkanlage nach dem Patentanspruch 1, gekennzeichnet durch eine in der Hauptstation vorhandene zweite Zeitmeßeinrichtung (115), deren Zeitkonstante diejenige der ersten Zeitmeßeinrichtung (215) der Unterstation übersteigt und deren Arbeitszustand durch die Betätigung des Antwortschalters eingeleitet wird, welche Zeitmeßeinrichtung (115) der Hauptstation bei der Rückkehr in den Ruhezustand, sofern der Antwortschalter betätigt ist, sowohl die erste Zeitmeßeinrichtung (114) der Hauptstation, als auch sich selber in den Arbeitszustand versetzt.

4. Funkanlage nach den Patentansprüchen 2 und 3, dadurch gekennzeichnet, daß bei der zweiten Zeitmeßeinrichtung (115) der Hauptstation die Dauer ihres Arbeitszustandes neu zu laufen beginnt, sofern sie während des Arbeitszustandes angestoßen wird, so daß diese zweite Zeitmeßeinrichtung (115) nur dann in ihren Ruhezustand zurückkehrt, wenn an der Hauptstation kein Schlußsignal empfangen wurde.

**Claims**

1. Simplex radio communication system with a main station (Fig. 1) having a transmitter-receiver (101, 102) and at least one substation (Fig. 2) having a transmitter-receiver (201, 202), in which system the traffic between the main station and the substation is carried by a single channel, and each of the stations is switchable from one station between reception and transmitter keying, having at the main station a manually operatable speaking key (118) for keying the associated transmitter (101), characterized in that in the main station there are a manually operatable answering key (120), a generator (113) of a summoning signal, and a first time-measuring device (114), which time-measuring device causes the transmission of a summoning signal by the transmitter and determines he duration of this signal; that as long as the answering key (120) is operated, the summoning signal is periodocally generated for a relatively short time at intervals which are long as compared with that time; that in each substation there are a receiving and evaluating device (211, 212) for the summoning signal and a first time-measuring device (215), which time-measuring device, based upon the reception of a summoning signal, keys the transmitter (201) of the respective substation and determines the duration of this keying; and that the time constant of the last-mentioned time-measuring device (215) is smaller than the intervals between the generation of the summoning signal, so that the keying of the respective substation (Fig. 2) is thus controlled solely from the main station (Fig. 1) by operation of the answering key (120).

2. Radio system according to claim 1, characterized in that in each substation there are a generator (213) of a clearing signal and a second time-measuring device (214), which time-measuring device is put into the opera⁺ing state every time the first time-measuring device (215) of this substation is returned to the rest state, and causes the transmission of a clearing signal by the transmitter (201) of the respective substation during a period of time of the order of magnitude of the duration of the summoning signal, and that in the main station there are a receiving and evaluating device (111, 112) for the clearing signal and gate circuits (117, 121) which cause the generation of the summoning signal insofar as a clearing signal is received and the answering key (120) is operated.

3. Radio system according to claim 1, characterized by the presence in the main station of a second time-measuring device (115), the time constant of which exceeds that of the first time-measuring device (215) of the substation, and the operating state of which is initiated by operation of the answering key, which time-measuring device (115) of the main station, upon return to the rest state, insofar as the answering key is operated, puts both the first time-measuring device (114) of the main station and also itself into the operating state.

4. Radio system according to claims 2 and 3, characterized in that in the case of the second time-measuring device (115) of the main station, the duration of its operating state recommences insofar as this device is restarted during the operating state, so that this second time-measuring device (115) returns to its rest state only when no clearing signal has been received at the main station.

## Revendications

1. Installation d'inter-communication radio, comprenant une station principale (fig. 1) munie d'un émetteur-récepteur (101, 102), et au moins une station secondaire (fig. 2) munie d'un émetteur-récepteur (201, 202), le trafic entre les stations principale et secondaire se déroulant dans cette installation sur un seul canal et les stations étant, depuis l'une d'elles, commutables chacune entre émission et réception à l'aide d'un commutateur de conversation (118), actionnable manuellement et se trouvant sur la station principale, pour la commutation de l'émetteur correspondant (101), caractérisée en ce que la station principale comporte un commutateur de réponse (120) actionnable manuellement, un générateur (113) générant un signal de sommation, et un premier agencement de mesure de temps (114), lequel agencement provoque l'émission du signal de sommation par l'émetteur et détermine la durée de ce signal, en ce que, aussi longtemps que le commutateur de réponse (120) est actionné, le signal de sommation est engendré chaque fois pendant une durée relativement courte avec des interruptions périodiques longues par rapport à cette durée, en ce que chaque station secondaire comporte un dispositif (211, 212) de réception et d'évaluation pour le signal de sommation, et un premier agencement de mesure de temps (215), lequel agencement, sur la base de la réception d'un signal de sommation, enclenche l'émetteur (201) de la station secondaire concernée et détermine la durée de cet enclenchement, et en ce que la constante de temps de l'agencement de mesure de temps dernièrement cité (215) est plus petite que les intervalles entre les générations du signal de sommation, de façon telle que la commutation de la station secondaire concernée (fig. 2) se trouve commandée exclusivement depuis la station principale (fig. 1), par l'actionnement du commutateur de réponse (120).

2. Installation radio selon la revendication 1, caractérisée en ce que chaque station secondaire comporte un générateur (213) générant un signal de fin, et un deuxième agencement de mesure de temps (214), lequel agencement, chaque fois sur la base du retour au repos du premier agencement de mesure de temps (215), met cette station secondaire en état de travail et, durant un temps de l'ordre de grandeur de la durée du signal de sommation, provoque l'émission d'un signal de fin par l'émetteur (201) de la station secondaire concernée, et en ce que la station principale comporte un dispositif (111, 112) de réception et d'évaluation pour le signal de fin, de même que des circuits de combinaisons logiques (117, 121) lesquels provoquent l'émission du signal de sommation pour autant qu'un signal de fin soit reçu et que le commutateur de réponse soit actionné.

3. Installation radio selon la revendication 1, caractérisée en ce que la station principale comprend un deuxième agencement de mesure de temps (115) dont la constante de temps est supérieure à celle du premier agencement de mesure de temps (215) de la station secondaire et dont l'état de travail est engagé par l'actionnement du commutateur de réponse, ce deuxième agencement de mesure de temps (115) de la station principale, lorsqu'il revient à l'état de repos et pour autant que le commutateur de réponse soit actionné, mettant à l'état de travail d'une part le premier agencement de mesure de temps (114) et d'autre part lui-même.

4. Installation radio selon les revendications 2 et 3, caractérisée en ce que la durée de l'état de travail du deuxième agencement de mesure de temps (115) de la station principale recommence à courir à neuf lorsque, pendant cet état de travail, il subit un nouveau choc d'enclenchement, de sorte que ce deuxième agencement de mesure de temps (115) ne revient à l'état de repos que lorsqu'aucun signal de fin n'est reçu à la station principale.

0 026 500

Fig. 1

Fig. 2